# EUROPEAN PATENT SPECIFICATION

(11) **EP 3 438 508 B1**
(45) Date of publication and mention of the grant of the patent: **06.05.2020**
(21) Application number: 16896826.1
(22) Date of filing: 30.03.2016
(51) Int. Cl.: F16H 57/031, F16H 57/035

(54) **TRANSMISSION CASE STRUCTURE FOR SADDLE-TYPE VEHICLE POWER UNIT**
GETRIEBEGEHÄUSESTRUKTUR FÜR ANTRIEBSEINHEIT VON SATTELFAHRZEUGEN
STRUCTURE DE BOÎTE DE TRANSMISSION POUR UNITÉ DE PUISSANCE DE VÉHICULE DE TYPE À SELLE

(43) Date of publication of application: 06.02.2019
(73) Proprietor: Honda Motor Co., Ltd., Tokyo 107-8556 (JP)
(72) Inventor: WAKASA, Hidetoshi, Wako-shi Saitama 351-0193 (JP)
(74) Representative: Dehns
(86) International application number: PCT/JP2016/060313
(87) International publication number: WO 2017/168606

(56) References cited:
- EP-A1- 2 019 233
- EP-A2- 2 020 536
- JP-A- 2000 018 348
- JP-A- 2008 169 913
- JP-A- 2011 080 576
- JP-A- 2013 257 010
- US-A1- 2014 187 365

## Description

### [Technical Field]

The present invention relates to a transmission case structure for a saddle-type vehicle power unit.

### [Background Art]

There has been known a transmission case for a belt continuously variable transmission that is integrally provided to an internal combustion engine and is disposed lateral to a rear wheel, as a transmission case structure for a saddle-type vehicle power unit (for example, see Patent Literature 1).

The transmission case includes a transmission case main body that extends laterally of the rear wheel from the internal combustion engine and is open at the opposite side to the rear wheel, and a transmission case that, together with the transmission case main body, forms a variable transmission chamber and is connected to the transmission case main body to close the open end of the transmission case main body.

The variable transmission chamber is provided with a drive shaft that is rotated by a drive force of the internal combustion engine and a transmission shaft that is provided on the rear wheel side to transmit the drive force to the rear wheel, in which an endless belt is wound around a drive pulley that is attached to the drive shaft and a driven pulley that is attached to the transmission shaft.

EP 2019233 discloses a transmission case cover for a transmission case which houses a power unit for a saddle-type vehicle. A belt type continuously variable transmission is provided within the transmission case which includes a drive pulley that is attached to a drive shaft rotated by a drive force generated from an internal combustion engine, a driven pulley attached to a transmission shaft, and an endless belt that is wound around the drive pulley and the driven pulley.

### [Citation List]

### [Patent Literature]

[Patent Literature 1]
Japanese Patent Laid-Open No. 2013-257010

### [Summary of Invention]

### [Technical Problem]

In the power unit for a saddle-type vehicle having a transmission case disclosed in Patent Literature 1, a belt is likely to vibrate in a direction orthogonal to an extending direction of the belt particularly, when the vehicle is accelerated or decelerated, and the belt may come into contact with an inner wall surface of the transmission case due to this vibration.

Since a slight positional deviation occurs at a joining portion between the transmission case main body and the transmission case cover due to dimensional errors, or the like when joining the transmission case main body and the transmission case cover, and a joined end surface is generally formed by cutting, it is necessary to separate a position of the joining portion from the belt in an axial direction so that the belt does not come into contact with the joining portion. Accordingly, the position of the joining portion is limited, and hence there is a problem in that it is difficult to secure the shaping flexibility of the transmission case main body and the transmission case cover.

It is an object of the present invention to provide a transmission case structure for a saddle-type vehicle power unit that can prevent a belt from coming into contact with a joining portion of a transmission case and secure shaping flexibility of a transmission case main body and a transmission case cover.

### [Solution to Problem]

To solve the above problems, the present invention provides a transmission case structure for a saddled vehicle power unit in which a transmission case that is integrally provided to an internal combustion engine and is disposed lateral to a rear wheel includes a transmission case main body that extends laterally of the rear wheel from the internal combustion engine and is open at an opposite side to the rear wheel, and a transmission case cover that, together with the transmission case main body, forms a variable transmission chamber and is connected to the transmission case main body to close an open end of the transmission case main body, the transmission case main body includes a bottom portion that is located lateral to the rear wheel, and a first peripheral wall that extends upwardly from the bottom portion and in which a distal end portion is open, the transmission case cover includes a second peripheral wall that is to be connected to the distal end portion of the first peripheral wall, the distal end portion of the first peripheral wall is connected to a distal end portion of the second peripheral wall, so that the variable transmission chamber is formed between the transmission case main body and the transmission case cover, and the variable transmission chamber houses a drive pulley that is attached to a drive shaft rotated by a drive force generated from the internal combustion engine, a driven pulley that is attached to a transmission shaft provided on the rear wheel side to transmit the drive force to the rear wheel, and an endless belt that is wound around the drive pulley and the driven pulley, wherein the distal end portion of the first peripheral wall and the distal end portion of the second peripheral wall are provided in a range of motion of the belt in an axial direction of the drive shaft, and recesses are formed in the distal end portion of the first peripheral wall and the distal end portion of the second peripheral wall along an extending direction of a straight line connecting an axis line of the drive shaft and an axis line of the transmission shaft, the recesses being recessed in a direction away from the belt; characterised in that: the recesses in the distal end portion of the first peripheral wall and the recesses in the distal end portion of the second peripheral wall are formed continuously with distal end portions of the first peripheral wall and distal end portions of the second peripheral wall (135g), respectively.

In the above-described configuration, an inner peripheral surface (134r) of the first peripheral wall (134g) and an inner peripheral surface (135r) of the second peripheral wall (135g) may be connected to the recesses (134s, 134t) and the recesses (135s, 135t) through curved surfaces (134y, 134u) and curved surfaces (135y, 135u), respectively.

In the above-described configuration, in a side view of a vehicle, the recesses (134s, 134t, 135s, 135t) may be formed at least within a range between the axis line (L1) of the drive shaft (33) and the axis line (L5) of the transmission shaft (172) in each distal end portion of the first peripheral wall (134g) and the second peripheral wall (135g).

In the above-described configuration, in a side view of a vehicle, the first peripheral wall (134g) may include a front peripheral wall (134m) that covers a front of the axis line (L1) of the drive shaft (33), a rear peripheral wall (134n) that covers a rear of the axis line (L5) of the transmission shaft (172), an upper peripheral wall (134p) that connects the front peripheral wall (134m) and the rear peripheral wall (134n), and a lower peripheral wall (134q) that connects the front peripheral wall (134m) and the rear peripheral wall (134n), so that the recesses (134s, 134t) are formed only in the upper peripheral wall (134p) and the lower peripheral wall (134q), respectively.

In the above-described configuration, in a side view of a vehicle, the first peripheral wall (134g) may include a front peripheral wall (134m) that covers the front of the axis line (L1) of the drive shaft (33), a rear peripheral wall (134n) that covers the rear of the axis line (L5) of the transmission shaft (172), an upper peripheral wall (134p) that connects upper portions of the front peripheral wall (134m) and the rear peripheral wall (134n), and a lower peripheral wall (134q) that connects lower portions of the front peripheral wall (134m) and the rear peripheral wall (134n), so that the recesses (134s, 134t) are formed in the upper peripheral wall (134p) and the lower peripheral wall (134q), respectively, and a front-rear length of the recess (134t) formed in the lower peripheral wall (134q) is longer than that of the recess (134s) formed in the upper peripheral wall (134p).

In the above-described configuration, in a side view of a vehicle, the first peripheral wall (134g) may include a front peripheral wall (134m) that covers the front of the axis line (L1) of the drive shaft (33), a rear peripheral wall (134n) that covers the rear of the axis line (L5) of the transmission shaft (172), an upper peripheral wall (134p) that connects upper portions of the front peripheral wall (134m) and the rear peripheral wall (134n), and a lower peripheral wall (134q) that connects lower portions of the front peripheral wall (134m) and the rear peripheral wall (134n), so that the recess (134t) is formed in the lower peripheral wall (134q), and the recess (134t) of the lower peripheral wall (134q) is formed at a position closer to the axis line (L5) of the transmission shaft (172) than the axis line (L1) of the drive shaft (33).

In the above-described configuration, in a side view of a vehicle, the first peripheral wall (134g) may include a front peripheral wall (134m) that covers the front of the axis line (L1) of the drive shaft (33), a rear peripheral wall (134n) that covers the rear of the axis line (L5) of the transmission shaft (172), an upper peripheral wall (134p) that connects upper portions of the front peripheral wall (134m) and the rear peripheral wall (134n), and a lower peripheral wall (134q) that connects lower portions of the front peripheral wall (134m) and the rear peripheral wall (134n), so that the recess (134s) is formed in the upper peripheral wall (134p), and the recess (134s) of the upper peripheral wall (134p) is formed at a position closer to the axis line (L1) of the drive shaft (33) than the axis line (L5) of the transmission shaft (172).

### [Advantageous Effects of Invention]

Since the distal end portion of the first peripheral wall and the distal end portion of the second peripheral wall of the present invention are provided in a range of motion of the belt in the axial direction of the drive shaft, and the recesses that are recessed in a direction away from the belt are formed in the distal end portion of the first peripheral wall and the distal end portion of the second peripheral wall along an extending direction of a straight line connecting an axis line of the drive shaft and an axis line of the transmission shaft, when a joining portion between the distal end portion of the first peripheral wall and the distal end portion of the second peripheral wall is formed to overlap with the belt in the axial direction of the drive shaft, the belt can be prevented from coming into direct contact with the joining portion between the first peripheral wall and the second peripheral wall even when the belt vibrates in a direction orthogonal to an extending direction of the belt and comes into contact with each inner wall surface of the first peripheral wall and the second peripheral wall of the transmission case. Accordingly, a degree of freedom of the position of the joining portion between the transmission case main body and the transmission case cover can be secured, and shaping flexibility of the transmission case main body and the transmission case cover can be also secured.

Each of the recesses is formed continuously with each distal end portion of the first peripheral wall and the second peripheral wall, and is connected to each inner peripheral surface of the first peripheral wall and the second peripheral wall through a curved surface, thereby capable of eliminating sharp portions from portions including the peripheries of the recesses.

Since in a side view of a vehicle, the recesses are formed at least within a range between the axis line of the drive shaft and the axis line of the transmission shaft in each distal end portion of the first peripheral wall and the second peripheral wall, in portions at least in the range between the axis line of the drive shaft and the axis line of the transmission shaft in each distal end portion of the first peripheral wall and the second peripheral wall, even when the belt is separated from the drive pulley and the driven pulley, and thus the belt is likely to vibrate in a direction orthogonal to the extending direction of the belt, the belt can be prevented from coming into direct contact with the joining portion between the first peripheral wall and the second peripheral wall by forming the recesses in the corresponding portions.

Since, in a side view of the vehicle, the first peripheral wall includes the front periphery wall that covers the front of the axis line of the drive shaft, the rear peripheral wall that covers the rear of the axis line of the transmission shaft, the upper peripheral wall that connects the front peripheral wall and the rear peripheral wall, and the lower peripheral wall that connects the front peripheral wall and the rear peripheral wall, and the recesses are formed only in the upper peripheral wall and the lower peripheral wall, respectively, even when the belt is separated from the drive pulley and the driven pulley in the upper peripheral wall and the lower peripheral wall that are proximate to the belt, and thus the belt is likely to vibrate in a direction orthogonal to the extending direction of the belt, the belt can be prevented from coming into direct contact with the joining portion between the first peripheral wall and the second peripheral wall by forming the recesses only within the range between the axis line of the drive shaft and the axis line of the transmission shaft, and the structure of the transmission case can be simplified by forming the recesses within the limitations.

Since, in a side view of the vehicle, the first peripheral wall includes the front peripheral wall that covers the front of the axis line of the drive shaft, the rear peripheral wall that covers the rear of the axis line of the transmission shaft, the upper peripheral wall that connects upper portions of the front peripheral wall and the rear peripheral wall, and the lower peripheral wall that connects lower portions of the front peripheral wall and the rear peripheral wall, the recesses are formed in the upper peripheral wall and the lower peripheral wall, and the front-rear length of the recess formed in the lower peripheral wall is longer than that of the recess formed in the upper peripheral wall, the inventors show the experiment result that when the belt vibrates, a contact area of the belt with the lower peripheral wall exists over a wider area in the front-rear direction than that with the upper peripheral wall. According to the above-described configuration, the belt can be prevented from coming into direct contact with the joining portion between the first peripheral wall and the second peripheral wall, and the structure of the transmission case can be simplified by forming the recesses within the limitations.

Since, in a side view of the vehicle, the first peripheral wall includes the front peripheral wall that covers the front of the axis line of the drive shaft, the rear peripheral wall that covers the rear of the axis line of the transmission shaft, the upper peripheral wall that connects upper portions of the front peripheral wall and the rear peripheral wall, and the lower peripheral wall that connects lower portions of the front peripheral wall and the rear peripheral wall, so that the recess is formed in the lower peripheral wall, and the recess of the lower peripheral wall is formed at a position closer to the axis line of the transmission shaft than the axis line of the drive shaft, the belt located below the straight line connecting the axis line of the drive shaft and the axis line of the transmission shaft is easily slackened particularly when the vehicle is accelerated, and the belt is likely to come in contact with the lower peripheral wall near the driven pulley that becomes a winding side of the belt located below the above-described straight line. According to the above-described configuration, the belt can be prevented from coming into direct contact with the joining portion between the first peripheral wall and the second peripheral wall, and the structure of the transmission case can be simplified by forming the recesses within the limitations.

Since, in a side view of the vehicle, the first peripheral wall includes the front peripheral wall that covers the front of the axis line of the drive shaft, the rear peripheral wall that covers the rear of the axis line of the transmission shaft, the upper peripheral wall that connects upper portions of the front peripheral wall and the rear peripheral wall, and the lower peripheral wall that connects lower portions of the front peripheral wall and the rear peripheral wall, so that the recess is formed in the upper peripheral wall, and the recess of the upper peripheral wall is formed at a position closer to the axis line of the drive shaft than the axis line of the transmission shaft, the belt located above the straight line connecting the axis line of the drive shaft and the axis line of the transmission shaft is easily slackened particularly when the vehicle is decelerated, and the belt is likely to come in contact with the upper peripheral wall near the drive pulley that becomes a winding side of the belt located above the above-described straight line. According to the above-described configuration, the belt can be prevented from coming into direct contact with the joining portion between the first peripheral wall and the second peripheral wall, and the structure of the transmission case can be simplified by forming the recesses within the limitations.

### [Brief Description of Drawings]

[Figure 1] Figure 1 is a left side view of a main part of a motorcycle including a transmission case for a power unit according to the present invention.
[Figure 2] Figure 2 is a cross-sectional view illustrating a power unit.
[Figure 3] Figure 3 is a left side view illustrating a transmission case main body and its periphery in a state where a transmission case cover is removed from a transmission case.
[Figure 4] Figure 4 is a side view illustrating the transmission case cover.
[Figure 5] Figure 5 is a cross-sectional view taken along line V-V of Figure 1.
[Figure 6] Figure 6 is an enlarged view of an area A of Figure 5.
[Figure 7] Figure 7 is a left side view illustrating the transmission case main body and a periphery thereof with the transmission case cover and a drive pulley removed.
[Figure 8] Figure 8 is a cross-sectional view taken along line VIII-VIII of Figure 7.

### [Description of Embodiment]

An embodiment of the present invention will be described below with reference to the drawings.

Note that in the explanation, directions such as front and rear, right and left, and upper and lower is the same as directions with respect to a vehicle body unless otherwise specially described. Also note that in the respective drawings, reference sign FR is indicative of a front side of the vehicle body, reference sign UP is indicative of an upper side of the vehicle body, and reference sign LH is indicative of a left side of the vehicle body.

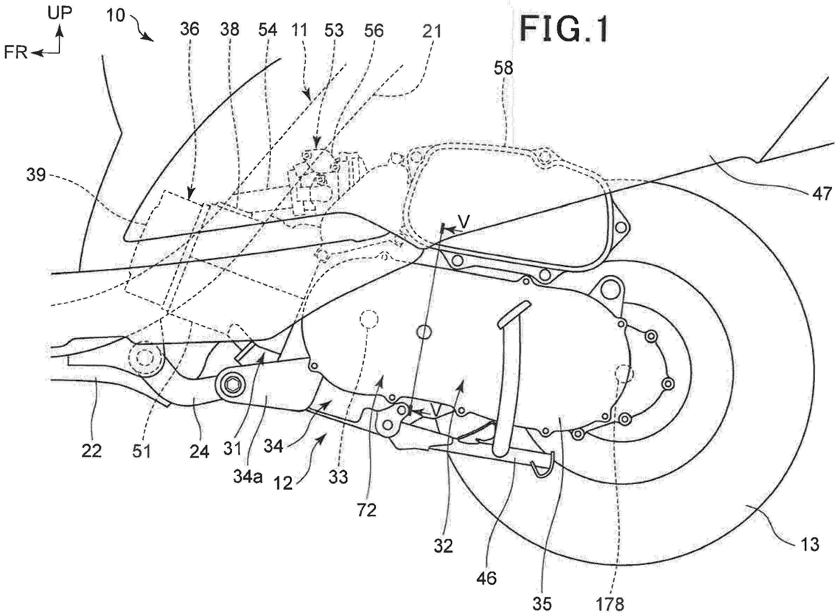

Figure 1 is a left side view of a main part of a motorcycle 10 including a transmission case 72 for a power unit 12 according to the present invention.

The motorcycle 10 is a saddle-type vehicle in which the power unit 12 is vertically swingably supported by a lower portion of a vehicle body frame 11, a rear wheel 13 is mounted at a rear end portion of the power unit 12, and a seat (not illuminated) is provided above the vehicle body frame 11. Note that reference sign 178 denotes an output shaft serving as an axle of the rear wheel 13.

The vehicle body frame 11 includes a pair of left and right rear frames 21 that extend upwardly to the rear direction, and a lower support member 22 is attached to the left and right rear frames 21. A lower portion of the power unit 12 is swingably supported by the lower support member 22 through a link member 24.

The power unit 12 is composed of a unit swing type internal combustion engine 31 that forms a front portion of the power unit 12, and a continuously variable transmission 32 that is disposed integrally with a rear portion of the internal combustion engine 31.

The internal combustion engine 31 includes a crankcase 34 in which a crankshaft 33 extending in a vehicle width direction is rotatably housed, and a cylinder 36 that is attached to a front end portion of the crankcase 34. The crankcase 34 is provided with the transmission case 72 at a left side portion of the crankcase 34, the transmission case 72 forming the continuously variable transmission 32. The cylinder 36 is inclined upwardly to the front direction, and includes a cylinder block, a cylinder head 38, and a head cover 39 that are stacked in this order and assembled to the crankcase 34, and the cylinder block and the cylinder head 38 are covered by a shroud 51 that is divided into two in the up-down direction.

An air intake device 53 is connected to the upper portion of the cylinder head 38, and an exhaust device is connected to the lower portion of the cylinder head 38.

The air intake device 53 includes an air intake pipe 54 that is attached to the cylinder head 38, a throttle body 56 that is connected to the air intake pipe 54, and an air cleaner 58 that is connected to the throttle body 56 through a connecting tube. Note that reference sign 34a denotes a pair of left and right hanger arms that are formed at a front lower portion of the crankcase 34 to connect to the link member 24, reference sign 46 denotes a main stand that is attached to a rear lower portion of the crankcase 34, and reference sign 47 denotes a vehicle body cover that is provided below the seat to cover the upper portion of the vehicle body, the upper portion of the internal combustion engine 31, and the like.

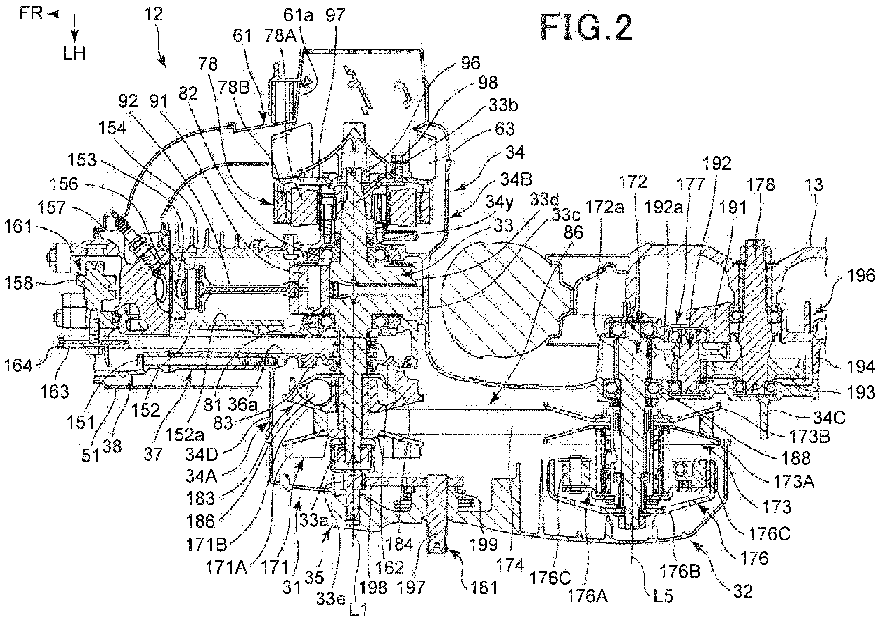

Figure 2 is a cross-sectional view illustrating the power unit 12.

The crankcase 34 is comprised of a left case 34A and a right case 34B into which the crankcase 34 is divided in the left-right direction. The left case 34A is formed integrally with a rearward extending portion 34C that extends rearwardly beyond the right case 34B, and a part of the front portion of the left case 34A and the rearward extending portion 34C form a transmission case main body 34D.

The crankshaft 33 includes a left shaft portion 33a, a right shaft portion 33b, a crank pin 91, and a pair of counter weights 33c, 33d. The left shaft portion 33a and the right shaft portion 33b are provided to extend to left and right sides of the crankshaft 33 in the vehicle width direction, respectively, and are supported by the left case 34A and the right case 34B through bearings 81, 82, respectively. The crank pin 91 is provided to extend in the vehicle width direction between the left shaft portion 33a and the right shaft portion 33b. The counter weights 33c, 33d are provided on the opposite side to the crank pin 91 with respect to the left shaft portion 33a and the right shaft portion 33b, respectively.

The cylinder block 37 and the cylinder head 38 are fixed to the crankcase 34 with a plurality of bolts 151 so as to be stacked in this order.

The cylinder block 37 is provided with a cylindrical cylinder liner 152 inside the cylinder block 37, and a piston 153 is movably inserted into a cylinder hole 152a that is formed in the cylinder liner 152. The piston pin 154 is fitted into the piston 153 to extend along an axial direction of the crankshaft 33, and the piston pin 154 is connected to the crank pin 91 through a connecting rod 92.

In the cylinder head 38, a combustion chamber 156 is formed on a joining surface between the cylinder block 37 and the cylinder head 38, and intake and exhaust valves and a spark plug 157 are disposed to face the combustion chamber 156. The cylinder head 38 includes a valve mechanism 161 including a camshaft 158 that drives intake and exhaust valves. A cam chain 164 is wound around a cam drive sprocket 162 that is attached to the left shaft portion 33a of the crankshaft 33 and a cam driven sprocket 163 that is attached to one end portion of the camshaft 158, and the cam chain 164 passes through a cam chain chamber 36a that is formed to pass through the cylinder block 37 and the cylinder head 38.

An AC generator 78 is provided to the right case 34B and the right shaft portion 33b. That is, a stator support portion 34y is provided in the right case 34B, and a stator 78A included in the AC generator 78 is fixed to the stator support portion 34y. A cup-shaped rotor support member 97 is attached to a distal end portion of the right shaft portion 33b with a nut 96, and a rotor 78B included in the AC generator 78 is attached to a peripheral wall of the rotor support member 97. The AC generator 78 includes the above-described stator 78A and rotor 78B, and the rotor 78B is rotated in the stator 78A to generate the electric power. A cooling fan 63 is fixed to the rotor support member 97 with a plurality of bolts 98. A fan cover 61 is attached to a side of the right case 34B, and a cooling air intake port 61a is formed in the fan cover 61. The cooling fan 63 rotates by rotation of the crankshaft 33 so that the external air is sucked from the cooling air intake port 61a into the fan cover 61, thereby capable of cooling each part of the internal combustion engine 31 such as the crankcase 34, and the cylinder 36.

The continuously variable transmission 32 includes a drive pulley 171, a driven shaft 172, a driven pulley 173, a belt 174, a centrifugal clutch 176, a reduction gear mechanism 177, an output shaft 178, and a kick start mechanism 181.

The drive pulley 171 is provided to the left shaft portion 33a of the crankshaft 33, and is composed of a drive-side left half body 171A that is fixed to the left shaft portion 33a, and a drive-side right half body 171B that is provided to be incapable of rotating relative to the left shaft portion 33a and be movable in the axial direction. The drive-side right half body 171B is biased toward the drive-side left half body 171A side by a biasing mechanism 183 when the crankshaft 33 rotates at a predetermined rotational speed or more. The biasing mechanism 183 includes a biasing plate 184 that is fixed to the left shaft portion 33a on a right side (the other side in the vehicle width direction) of the drive-side right half body 171B, and a biasing ball 186 that is disposed between the drive-side right half body 171B and the biasing plate 184. The drive-side right half body 171B and the biasing plate 184 have respective inclined portions that become closer to each other toward the outside in the radial direction.

The driven shaft 172 is disposed behind the left shaft portion 33a to be parallel to the left shaft portion 33a. The driven shaft 172 is rotatably supported by the transmission case main body 34D through a bearing 188. The driven shaft 172 is provided with the driven pulley 173. The driven pulley 173 is composed of a driven-side left half body 173A that is provided to be incapable of rotating relative to the driven shaft 172 and be movable in the axial direction, and a driven-side right half body 173B that is fixed to the driven shaft 172.

The belt 174 is wound around the drive pulley 171 and the driven pulley 173.

The centrifugal clutch 176 that is disposed on the left side (one side in the vehicle width direction) of the driven-side left half body 173A is connected to the driven-side left half body 173A. The centrifugal clutch 176 includes an input-side inner rotation portion 176A that rotates together with the left-side left half body 173A, and a drum 176B that is formed in a cup shape so as to surround the inner rotation portion 176A and is fixed to the driven shaft 172. The inner rotation portion 176A is provided with a plurality of clutch shoes 176C that swing by centrifugal forces and extend outwardly in the radial direction, and the clutch shoes 176C are configured to be connected to or separated from the drum 176B according to the rotational speed of the driven pulley 173.

The reduction gear mechanism 177 is provided on the downstream side of the drive force from the driven shaft 172 on the right side of the driven pulley 173. The reduction gear mechanism 177 includes the rearward extending portion 34C of the left case 34A, a driven shaft gear portion 172a of the driven shaft 172, an intermediate gear 191, an intermediate shaft 192, an output gear 193, and a reduction gear mechanism cover 194.

The intermediate gear 191 that is fixed to the intermediate shaft 192 meshes with the driven shaft gear portion 172a. An intermediate shaft gear portion 192a is formed in the intermediate shaft 192, and the output gear 193 that is fixed to the output shaft 178 meshes with the intermediate shaft gear portion 192a. The rearward extending portion 34C and the reduction gear mechanism cover 194 that is attached to the outer side surface of the rearward extending portion 34C form a speed reduction unit case 196 of the reduction gear mechanism 177.

A right-side end portion of the driven shaft 172, both end portions of the intermediate shaft 192, and the left end portion and the middle portion in the vehicle width direction of the output shaft 178 are supported by the rearward extending portion 34C and the reduction gear mechanism cover 194 through the respective bearings. The rear wheel 13 is attached to the output shaft 178.

The kick start mechanism 181 is provided to a transmission case cover 35. The kick start mechanism 181 includes a kick shaft 197 that is pivotally supported by the transmission case cover 35, a kick drive gear 198 that is fixed to an end portion located inside in the vehicle width direction of the kick shaft 197, a return spring 199 that returns the rotation of the kick drive gear 198, and a kick arm that is attached to an end portion located outside in the vehicle width direction of the kick shaft 197. The kick shaft 197 is disposed parallel to the crankshaft 33. The kick drive gear 198 meshes with the kick driven gear portion 33e that is formed in the left shaft portion 33a of the crankshaft 33.

The operation of the continuously variable transmission 32 described above will be described below.

When the crankshaft 33 starts to rotate, the drive pulley 171 rotates in a state where the drive-side right half body 171B is located at a predetermined position farthest from the drive-side left half body 171A until the rotational speed of the crankshaft 33 reaches a predetermined rotational speed. The winding radius of the belt 174 with respect to the drive pulley 171 at this moment becomes the smallest. To the contrary, the winding radius of the belt 174 with respect to the driven pulley 173 becomes the largest. Accordingly, a gear ratio between the crankshaft 33 and the driven shaft 172 becomes larger.

When the rotational speed of the crankshaft 33 is equal to or greater than the predetermined rotational speed, the biasing ball 186 rotates together with the drive-side right half body 171B and the biasing plate 184, and the biasing ball 186 moves outwardly in the radial direction under centrifugal forces to push the inclined portion of the drive-side right half body 171B toward the left side in the axial direction of the left shaft portion 33a, so that the drive-side right half body 171B moves toward the drive-side left half body 171A side. As a result, the winding radius of belt 174 with respect to the drive pulley 171 becomes larger, but the winding radius of belt 174 with respect to the driven pulley 173 becomes smaller, resulting that the gear ratio between the crankshaft 33 and the driven shaft 172 becomes smaller. The gear ratio changes steplessly according to an axial position of the drive-side right half body 171B of the drive pulley 171.

In the driven pulley 173, when the driven-side left half body 173A and the inner rotation portion 176A of the centrifugal clutch 176 are rotating together, the centrifugal forces acting on the clutch shoes 176C of the inner rotation portion 176A are small until the rotational speed of the driven-side left half body 173A reaches a fixed rotational speed, and therefore the clutch shoes 176C is separated from the drum 176B. When the rotational speed of the driven-side left half body 173A is equal to or greater than a fixed rotational speed, the clutch shoes 176C come into contact with the inner peripheral surface of the drum 176B due to the centrifugal forces, and then the centrifugal clutch 176 is connected. That is, the drive force is transmitted from the inner rotation portion 176A to the driven shaft 172 through the drum 176B.

The drive force transmitted to the driven shaft 172 is transmitted to the output shaft 178 through each gear (the driven shaft gear portion 172a, the intermediate gear 191, the intermediate shaft gear portion 192a, and the output gear 193) of the reduction gear mechanism 177, thereby enabling the rear wheel 13 to be rotated.

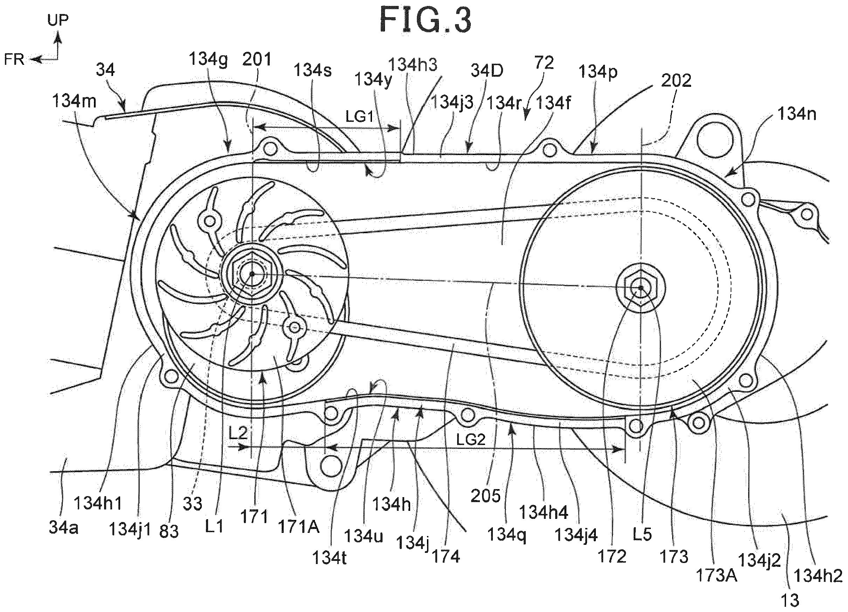

Figure 3 is a left side view illustrating the transmission case main body 34D and its periphery in a state where the transmission case cover 35 (see Figure 2) is removed from the continuously variable transmission 32.

The transmission case main body 34D of the transmission case 72 is comprised of a main body bottom portion 134f that is disposed inwardly in the vehicle width direction, and a main body peripheral wall 134g that rises outwardly in the vehicle width direction from the peripheral edge of the main body bottom portion 134f. In the main body peripheral wall 134g, a main body mating surface 134j that continues in a substantially ellipse shape in a side view is formed in a main body distal end portion 134h that forms an opening edge of the main body peripheral wall 134g.

The main body peripheral wall 134g includes a main body front peripheral wall 134m that is located forward of the crank axis line L1 that is an axis line of the crankshaft 33, a main body rear peripheral wall 134n that is located rearward of the driven axis line L5 that is an axis line of the driven shaft 172, a main body upper peripheral wall 134p that connects an upper portion of the main body front peripheral wall 134m and an upper portion of the main body rear peripheral wall 134n, and a main body lower peripheral wall 134q that connects a lower portion of the main body front peripheral wall 134m and a lower portion of the main body rear peripheral wall 134n. Note that reference sign 201 denotes a front virtual straight line that extends vertically through the crank axis line L1, and reference sign 202 denotes a rear virtual straight line that extends vertically through the driven axis line L5.

The above-described main body peripheral wall 134g is divided into the main body front peripheral wall 134m, the main body rear peripheral wall 134n, the main body upper peripheral wall 134p, and the main body lower peripheral wall 134q by the front virtual straight line 201 and the rear virtual straight line 202.

The main body distal end portion 134h includes a front distal end portion 134h1, a rear distal end portion 134h2, an upper distal end portion 134h3, and a lower distal end portion 134h4 that are included in the main body front peripheral wall 134m, the main body rear peripheral wall 134n, the main body upper peripheral wall 134p, and the main body lower peripheral wall 134q, respectively.

The main body mating surface 134j includes a front mating surface 134j1, a rear mating surface 134j2, an upper mating surface 134j3, and a lower mating surface 134j4 that are included in the main body front peripheral wall 134m, the main body rear peripheral wall 134n, the main body upper peripheral wall 134p, and the main body lower peripheral wall 134q, respectively.

The front mating surface 134j1 is formed in the front distal end portion 134h1, the rear mating surface 134j2 is formed in the rear distal end portion 134h2, the upper mating surface 134j3 is formed in the upper distal end portion 134h3, and the lower mating surface 134j4 is formed in the lower distal end portion 134h4.

In the upper distal end portion 134h3, a main body upper recess 134s is formed at a corner between an inner peripheral surface 134r of the main body peripheral wall 134g and the upper mating surface 134j3. The main body upper recess 134s is formed at a position closer to the front virtual straight line 201 than the rear virtual straight line 202.

In the lower distal end portion 134h4, a main body lower recess 134t is formed at a corner between the inner peripheral surface 134r of the main body peripheral wall 134g and the lower mating surface 134j4. The main body lower recess 134t is formed at a position closer to the rear virtual straight line 202 than the front virtual straight line 201.

A front end of the main body upper recess 134s is on the front virtual straight line 201, and a distance between a front end of the main body lower recess 134t and the front virtual straight line 201 is set to L2.

A front-rear length LG2 of the main body lower recess 134t is longer than a front-rear length LG1 of the main body upper recess 134s. Note that reference sign 205 denotes a straight line that connects the crank axis line L1 that is the axis line of the crankshaft 33 and the driven axis line L5 that is the axis line of the driven shaft 172. Note that each of LG1 and LG2 may be a length along the straight line 205.

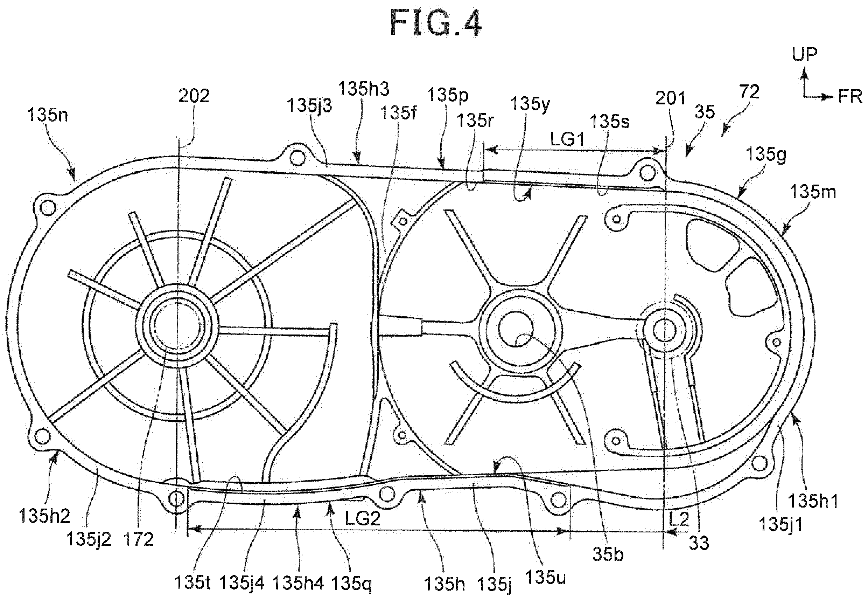

Figure 4 is a side view illustrating the transmission case cover 35.

The transmission case cover 35 of the transmission case 72 is comprised of a cover bottom portion 135f that is disposed inwardly in the vehicle width direction, and a cover peripheral wall 135g that rises outwardly in the vehicle width direction from the peripheral edge of the cover bottom portion 135f. In the cover peripheral wall 135g, a cover mating surface 135j that continues in a substantially ellipse shape in a side view is formed in a cover distal end portion 135h that forms an opening edge.

The cover peripheral wall 135g includes a cover front peripheral wall 135m that is located forward of the front virtual straight line 201 (i.e., the crank axis line L1 (see Figure 3)), a cover rear peripheral wall 135n that is located rearward of the rear virtual straight line 202 (i.e., the driven axis line L5 (see Figure 3)), a cover upper peripheral wall 135p that connects an upper portion of the cover front peripheral wall 135m and an upper portion of the cover rear peripheral wall 135n, and a cover lower peripheral wall 135q that connects a lower portion of the cover front peripheral wall 135m and a lower portion of the cover rear peripheral wall 135n.

The above-described cover peripheral wall 135g is divided into the cover front peripheral wall 135m, the cover rear peripheral wall 135n, the cover upper peripheral wall 135p, and the cover lower peripheral wall 135q by the front virtual straight line 201 and the rear virtual straight line 202.

The cover distal end portion 135h includes a front distal end portion 135h1, a rear distal end portion 135h2, an upper distal end portion 135h3, and a lower distal end portion 135h4 that are included in the cover front peripheral wall 135m, the cover rear peripheral wall 135n, the cover upper peripheral wall 135p, and the cover lower peripheral wall 135q, respectively.

The cover mating surface 135j includes a front mating surface 135j1, a rear mating surface 135j2, an upper mating surface 135j3, and a lower mating surface 135j4 that are included in the cover front peripheral wall 135m, the cover rear peripheral wall 135n, the cover upper peripheral wall 135p, and the cover lower peripheral wall 135q, respectively.

The front mating surface 135j1 is formed in the front distal end portion 135h1, the rear mating surface 135j2 is formed in the rear distal end portion 135h2, the upper mating surface 135j3 is formed in the upper distal end portion 135h3, and the lower mating surface 135j4 is formed in the lower distal end portion 135h4.

In the upper distal end portion 135h3, a cover upper recess 135s is formed at a corner between an inner peripheral surface 135r of the cover peripheral wall 135g and the upper mating surface 135j3. The cover upper recess 135s is formed at a position closer to the front virtual straight line 201 than the rear virtual straight line 202.

In the lower distal end portion 135h4, a cover lower recess 135t is formed at a corner between the inner peripheral surface 135r of the cover peripheral wall 135g and the lower mating surface 135j4. The cover lower recess 135t is formed at a position closer to the rear virtual straight line 202 than the front virtual straight line 201.

A front end of the cover upper recess 135s is on the front virtual straight line 201, and a distance between a front end of the cover lower recess 135t and the front virtual straight line 201 is set to L2.

A front-rear length of the cover upper recess 135s is set to LG1 that is the same as the front-rear length of the main body upper recess 134s (see Figure 3). A front-rear length of the cover lower recess 135t is set to LG2 that is the same as the front-rear length of the main body lower recess 134t (see Figure 3). In Figure 3 and Figure 4, in a state where the transmission case cover 35 is assembled to the transmission case main body 34D, the main body upper recess 134s and the cover upper recess 135s overlap with each other in the vehicle width direction, and the main body lower recess 134t and the cover lower recess 135t overlap with each other in the vehicle width direction.

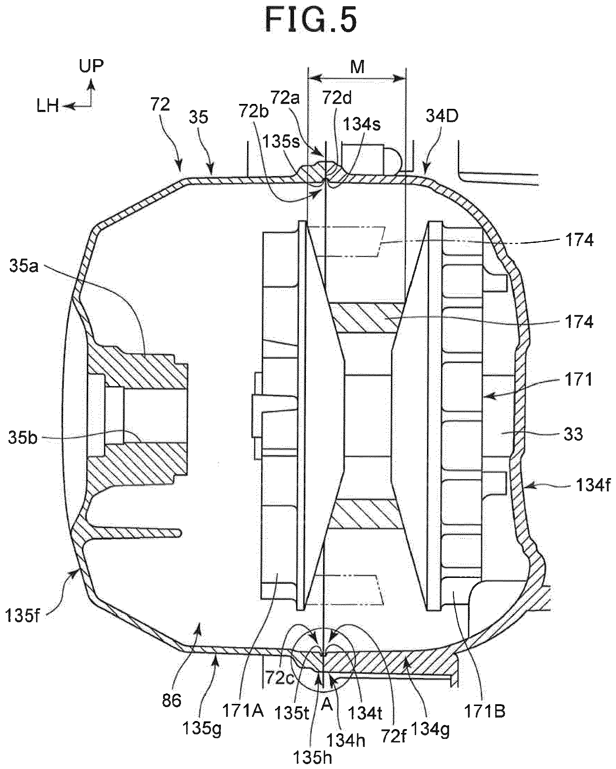

In Figure 3 and Figure 4, when the motorcycle 10 (see Figure 1) is decelerated, for example, under rotation of the belt 174, the drive pulley 171 experiences a sudden decrease in the rotational speed together with the crankshaft 33, and the driven pulley 173 experiences a more gentle decrease in the rotational speed than the drive pulley 171, together with the rear wheel 13 and the driven shaft 172. Thus, since the rotational speed of the driven pulley 173 is higher than that of the drive pulley 171, the belt 174 located above the straight line 205 becomes a slack side of the belt 174, and the belt 174 located below the straight line 205 becomes a tension side of the belt 174. Particularly, the belt 174 located above the straight line 205 is easily slackened near the drive pulley 171, and is likely to come in contact with a joining portion 72a (see Figure 5) between the main body upper peripheral wall 134p and the cover upper peripheral wall 135p.

The upper mating surfaces 134j3, 135j3 are located in the joining portion 72a. On the edges of the upper mating surfaces 134j3, 135j3 in the as-processed condition, burrs and the like may be generated, or a level difference between the upper mating surfaces 134j3, 135j3 may occur after joining the upper mating surfaces 134j3, 135j3. Since the belt 174 may come into contact with the upper mating surfaces 134j3, 135j3 having such burrs or level difference, in the present embodiment, the main body upper recess 134s and the cover upper recess 135s are formed on the upper mating surfaces 134j3, 135j3, respectively.

When the motorcycle 10 is accelerated, for example, under rotation of the belt 174, a large torque acts on the drive pulley 171 from the crankshaft 33, and a smaller torque than the torque acting on the drive pulley 171 acts on the driven pulley 173. Thus, the belt 174 located above the straight line 205 becomes a tension side of the belt 174, and the belt 174 located below the straight line 205 becomes a slack side of the belt 174. Particularly, the belt 174 located below the straight line 205 is easily slackened near the driven pulley 173, and is likely to come in contact with a joining portion 72a between the main body lower peripheral wall 134q and the cover lower peripheral wall 135q.

On the edges of the lower mating surfaces 134j4, 135j4 located in the joining portion 72a, in the as-processed condition, burrs and the like may be generated, or a level difference between the lower mating surfaces 134j4, 135j4 may occur after joining the lower mating surfaces 134j4, 135j4. Since the belt 174 may come into contact with the lower mating surfaces 134j4, 135j4 having such burrs or level difference, in the present embodiment, the main body lower recess 134t and the cover lower recess 135t are formed on the lower mating surfaces 134j4, 135j4, respectively.

The front-rear length LG2 of the main body lower recess 134t and the cover lower recess 135t is longer than the front-rear length LG1 of the main body upper recess 134s and the cover upper recess 135s. This is based on the inventors' experiment result that when the belt 174 vibrates up and down, a contact area of the belt 174 with the main body lower peripheral wall 134q and the cover lower peripheral wall 135q exists over a wider area in the front-rear direction than that with the main body upper peripheral wall 134p and the cover upper peripheral wall 135p.

Figure 5 is a cross-sectional view taken along line V-V of Figure 1.

In the joining portion 72a between the transmission case main body 34D and the transmission case cover 35 of the transmission case 72, an upper recess 72b and a lower recess 72c are formed in the upper portion and the lower portion of the joining portion 72a, respectively, so as to face a variable transmission chamber 86. The upper recess 72b is formed from the main body upper recess 134s and the cover upper recess 135s. The lower recess 72c is formed from the main body lower recess 134t and the cover lower recess 135t.

A mating surface 72d of the joining portion 72a is a surface that is formed from the main body mating surface 134j (see Figure 3) and the cover mating surface 135j (see Figure 4) when the main body mating surface 134j is mated with the cover mating surface 135j, and is located inside the movable range M along in the axial direction of the crankshaft 33 in the belt 174.

The belt 174 indicated by a solid line is located on an innermost side in the vehicle width direction so that the winding radius of the belt 174 on the drive pulley 171 is the smallest. The belt 174 indicated by a virtual line is located on an outermost side in the vehicle width direction so that the winding radius of the belt 174 on the drive pulley 171 is the largest. A moving range in the vehicle width direction of the above-described belt 174 indicated by the solid line and belt 174 indicated by the virtual line is represented as the movable range M.

Note that reference sign 35a denotes a boss that is formed on an inner surface of the transmission case cover 35, and reference sign 35b denotes a through hole that is formed in the boss 35a to support the kick shaft 197 (see Figure 2).

As described above, even when the mating surface 72d of the joining portion 72a is provided in the movable range M of the belt 174, the upper recess 72b and the lower recess 72c that are formed in the mating surface 72 can prevent the belt 174 from coming into contact with the mating surface 72d.

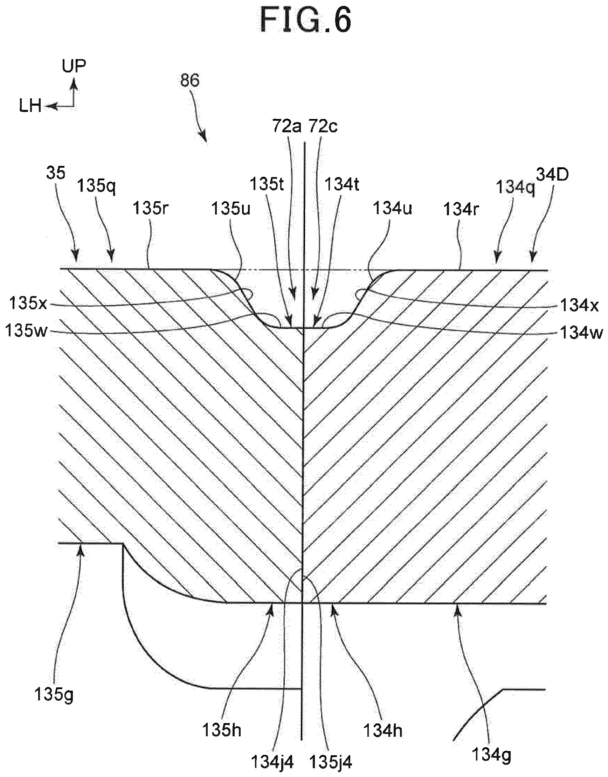

Figure 6 is an enlarged view of an area A of Figure 5.

The main body lower recess 134t of the main body lower peripheral wall 134q in the transmission case main body 34D includes a bottom surface 134w of the main body lower recess 134t and a side surface 134x that extends upwardly from the bottom surface 134w. A curved surface 134u is formed at a corner between the side surface 134x and the inner peripheral surface 134r of the main body lower peripheral wall 134q, the curved surface 134u protruding inward of the variable transmission chamber 86.

The cover lower recess 135t of the cover lower peripheral wall 135q in the transmission case cover 35 includes a bottom surface 135w of the cover lower recess 135t and a side surface 135x that extends upwardly from the bottom surface 135w. A curved surface 135u is formed at a corner between the side surface 135x and the inner peripheral surface 135r of the cover lower peripheral wall 135q, the curved surface 135u protruding inward of the variable transmission chamber 86.

Note that the virtual line in Figure 6 represents an inner peripheral surface of a conventional transmission case.

In Figure 3, a curved surface 134y is formed at a corner between the side surface of the main body upper recess 134s and the inner peripheral surface 134r of the main body upper peripheral wall 134p in the transmission case main body 34D, the curved surface 134y protruding inward of the variable transmission chamber 86 (see Figure 5). In Figure 4, a curved surface 135y is formed at a corner between the side surface of the cover upper recess 135s and the inner peripheral surface 135r of the cover upper peripheral wall 135p in the transmission case cover 35, the curved surface 135y protruding inward of the variable transmission chamber 86 (see Figure 5).

The above-described main body upper recess 134s, cover upper recess 135s, main body lower recess 134t, and cover lower recess 135t are molded by casting, thereby capable of being easily formed without increasing the number of components.

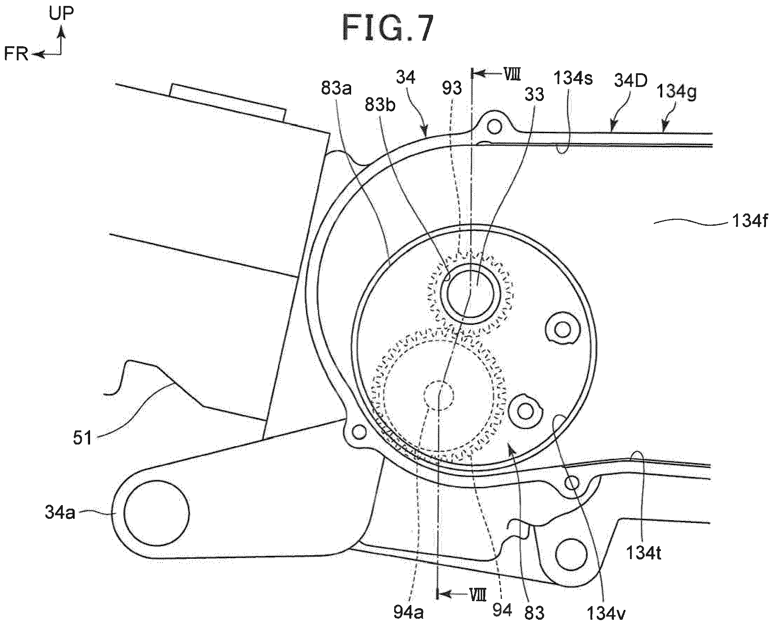

Figure 7 is a left side view illustrating the transmission case main body 34D and the periphery thereof with the transmission case cover 35 and the drive pulley 171 (see Figure 3) removed.

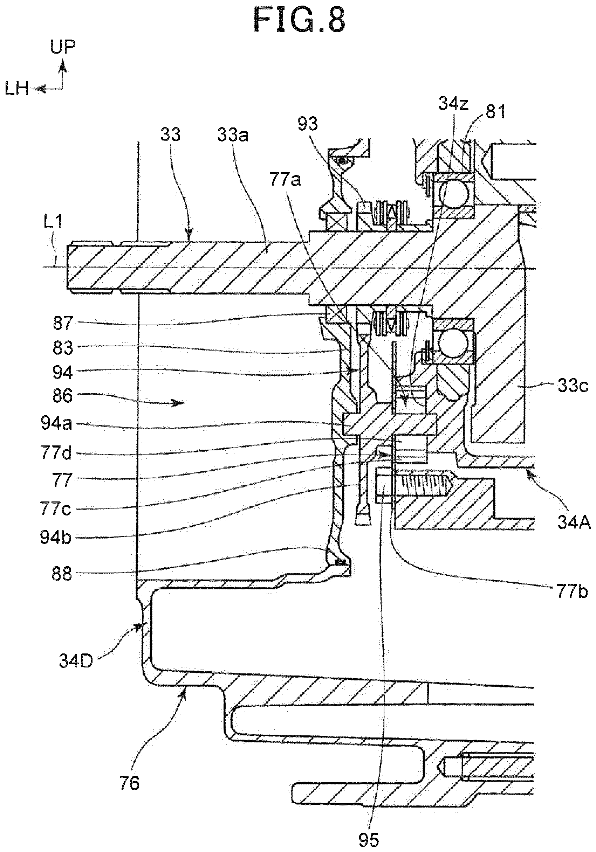

An oil separator mounting opening 134v on which an oil separator 83 is mounted is formed at a front portion of the main body bottom portion 134f of the transmission case main body 34D, and the oil separator 83 is mounted in the oil separator mounting opening 134v. An O-ring 88 (see Figure 8) seals between an outer peripheral surface 83a of the oil separator 83 and the oil separator mounting opening 134v.

A through hole 83b into which the crankshaft 33 is inserted is opened in the oil separator 83. An oil pump 77 (see Figure 8) is disposed below the crankshaft 33.

The oil pump 77 is connected to the oil pump driven gear 94 that meshes with an oil pump drive gear 93 attached to the crankshaft 33, so as to be driven by the drive force of the crankshaft 33.

An outline of the oil pump driven gear 94 is provided to protrude outwardly in the radial direction from the oil separator mounting opening 134v in a side view of the vehicle. In other words, the oil pump driven gear 94 overlaps with the edge of the oil separator mounting opening 134v on the outer side in the vehicle width direction.

Thus, the size of the oil separator mounting opening 134v is reduced, thereby capable of miniaturizing the transmission case main body 34D and thus the transmission case 72, and increasing the degree of freedom of the mounting position of the oil separator 83. Note that since an inner diameter of the oil separator mounting opening 134v is larger than an outer diameter of the oil pump driven gear 94 (addendum circle diameter), no problem exists in assembling the oil pump driven gear 94 to the inside of transmission case main body 34D through the oil separator mounting opening 134v.

Figure 8 is a cross-sectional view taken along line VIII-VIII of Figure 7.

The oil pump drive gear 93 is fixed to the left shaft portion 33a of the crankshaft 33 to mesh with the oil pump driven gear 94. The oil pump 77 is attached to the oil pump driven gear 94. Note that reference sign 33c denotes a counter weight that is provided to the crankshaft 33, and reference sign L1 denotes a crank axis line that is an axis line of the crankshaft 33.

The oil pump driven gear 94 is formed integrally from a shaft portion 94a, and a driven gear 94b that is formed at the middle portion of the shaft portion 94a, and both end portions of the shaft portion 94a are rotatably supported by the left case 34A and the oil separator 83.

The oil pump 77 is comprised of a pump recess 34z, a rotor assembly 77a, and a holding plate 77b.

The pump recess 34z is formed by the left case 34A. The rotor assembly 77a is disposed in the pump recess 34z, and is engaged in one end portion of the shaft portion 94a of the oil pump driven gear 94. The holding plate 77b is attached to the left case 34A with a bolt 95 to be held the rotor assembly 77a from the side.

The rotor assembly 77a includes an outer rotor 77c that is rotatably housed in the pump recess 34z and an inner rotor 77d that has a teeth portion that meshes with a teeth portion formed on an inner periphery surface of the outer rotor 77c and is disposed in the outer rotor 77c. The inner rotor 77d is engaged to one end portion of the shaft portion 94a to be rotatable together with the oil pump driven gear 94. Note that reference sign 76 denotes an oil pan that is integrally provided in the lower portion of the crankcase 34, reference sign 87 denotes an oil seal that seals between the crankshaft 33 and the oil separator 83, and reference sign 88 denotes an O-ring that seals between the left case 34A and the oil separator 83.

In Figure 1, Figure 2, and Figure 5, in the transmission case structure for the power unit 12 for the motorcycle 10 as a saddle-type vehicle, the transmission case 72 that is integrally provided to the internal combustion engine 31 and is disposed lateral to the rear wheel 13 includes the transmission case main body 34D that extends laterally of the rear wheel 13 from the internal combustion engine 31 and is open at the opposite side to the rear wheel 13, and the transmission case cover 35 that, together with the transmission case main body 34D, forms the variable transmission chamber 86 and is connected to the transmission case main body 34D to close the open end of the transmission case main body 34D, the transmission case main body 34D includes the main body bottom portion 134f that serves as a bottom portion located lateral to the rear wheel 13, and the main body peripheral wall 134g that serves as a first peripheral wall extending upwardly from the main body bottom portion 134f and in which the main body distal end portion 134h serving as a distal end portion is open, the transmission case cover 35 includes the cover peripheral wall 135g that serves as a second peripheral wall to be connected to the main body distal end portion 134h of the main body peripheral wall 134g, the main body distal end portion 134h of the main body peripheral wall 134g is connected to the cover distal end portion 135h that is a distal end portion of the cover peripheral wall 135g, so that the variable transmission chamber 86 is formed between the transmission case main body 34D and the transmission case cover 35, and the variable transmission chamber 86 houses the drive pulley 171 that is attached to the crankshaft 33 as a drive shaft rotated by the drive force generated from the internal combustion engine 31, the driven pulley 173 that is attached to the driven shaft 172 as a transmission shaft provided on the rear wheel 13 side to transmit the drive force to the rear wheel 13, and the endless belt 174 that is wound around the drive pulley 171 and the driven pulley 173. The main body distal end portion 134h of the main body peripheral wall 134g and the cover distal end portion 135h of the cover peripheral wall 135g are provided in a range of motion (movable range M) of the belt 174 in the axial direction of the crankshaft 33, and the main body upper recess 134s, the main body lower recess 134t, the cover upper recess 135s, and the cover lower recess 135t are formed as recesses that are recessed in a direction away from the belt 174, in the main body distal end portion 134h of the main body peripheral wall 134g and the cover distal end portion 135h of the cover peripheral wall 135g, along an extending direction of the straight line 205 (see Figure 3) connecting the crank axis line L1 as an axis line of the crankshaft 33 and the driven axis line L5 as an axis line of the driven shaft 172.

According to this configuration, when the main body distal end portion 134h of the main body peripheral wall 134g and the cover distal end portion 135h of the cover peripheral wall 135g are formed so as to overlap with the belt 174 in the axial direction of the crankshaft 33, the belt 174 can be prevented from coming into direct contact with the joining portion 72a between the main body peripheral wall 134g and the cover peripheral wall 135g even when the belt 174 vibrates in a direction orthogonal to the extending direction of the belt 174 to cause contact with the respective inner peripheral surfaces 134r, 135r of the main body peripheral wall 134g and the cover peripheral wall 135g of the transmission case 72. Accordingly, the degree of freedom of the position of the joining portion 72a between the transmission case main body 34D and the transmission case cover 35 can be secured, and the shaping flexibility of the transmission case main body 34D and the transmission case cover 35 can be also secured.

In Figure 3 through Figure 6, the main body upper recess 134s and the main body lower recess 134t are formed continuously with the main body distal end portion 134h of the main body peripheral wall 134g, and the cover upper recess 135s and the cover lower recess 135t are formed integrally with the cover distal end portion 135h of the cover peripheral wall 135g, and the inner peripheral surface 134r of the main body peripheral wall 134g is connected to the main body upper recess 134s and the main body lower recess 134t through the curved surfaces 134y, 134u, respectively, and the inner peripheral surface 135r of the cover peripheral wall 135g is connected to the cover upper recess 135s and the cover lower recess 135t through the curved surfaces 135y, 135u, respectively. Therefore, even when the belt 174 comes into contact with the peripheries of the main body upper recess 134s, the main body lower recess 134t, the cover upper recess 135s, and the cover lower recess 135t, the cuved surfaces 134y, 134u, 135y, and 135u can eliminate sharp portions from portions including the peripheries of the main body upper recess 134s, the main body lower recess 134t, the cover upper recess 135s, and the cover lower recess 135t.

In Figure 3 and Figure 4, since the main body upper recess 134s, the main body lower recess 134t, the cover upper recess 135s, and the cover lower recess 135t are formed at least within a range between the crank axis line L1 of the crankshaft 33 and the driven axis line L5 of the driven shaft 172 in the main body distal end portion 134h of the main body peripheral wall 134g and the cover distal end portion 135h of the cover peripheral wall 135g, in a side view of the vehicle, in portions at least within the range between the crank axis line L1 and the driven axis line L5 in the main body distal end portion 134h of the main body peripheral wall 134g and the cover distal end portion 135h of the cover peripheral wall 135g, even when the belt 174 is separated from the drive pulley 171 and the driven pulley 173, and thus the belt 174 is likely to vibrate in a direction orthogonal to the extending direction of the belt 174, the belt 174 can be prevented from coming into direct contact with the joining portion 72a between the main body peripheral wall 134g and the cover peripheral wall 135g by forming the main body upper recess 134s, the main body lower recess 134t, the cover upper recess 135s, and the cover lower recess 135t in the above-described portions.

In Figure 3, since the main body peripheral wall 134g includes the main body front peripheral wall 134m that serves as a front peripheral wall covering the front of the crank axis line L1 of the crankshaft 33, the main body rear peripheral wall 134n that serves as a rear peripheral wall covering the rear of the driven axis line L5 of the driven shaft 172, the main body upper peripheral wall 134p that serves an upper peripheral wall connecting the main body front peripheral wall 134m and the main body rear peripheral wall 134n, and the main body lower peripheral wall 134q that serves as a lower peripheral wall connecting the main body front peripheral wall 134m and the main body rear peripheral wall 134n, and the main body upper recess 134s and the main body lower recess 134t are formed only in the main body upper peripheral wall 134p and the main body lower peripheral wall 134q, respectively, in a side view of the vehicle, even when the belt 174 is separated from the drive pulley 171 and the driven pulley 173 in the main body upper peripheral wall 134p and the main body lower peripheral wall 134q that are proximate to the belt 174, and thus the belt 174 is likely to vibrate in a direction orthogonal to the extending direction of the belt 174, the belt 174 can be prevented from coming into direct contact with the joining portion 72a between the main body peripheral wall 134g and the cover peripheral wall 135g by forming the main body upper recess 134s and the main body lower recess 134t only within the range between the crank axis line L1 and the driven axis line L5. Accordingly, the belt 174 can be prevented from coming into direct contact with the joining portion 72a between the main body peripheral wall 134g and the cover peripheral wall 135g, and the main body upper recess 134s and the main body lower recess 134t are formed within the limitations, thereby capable of simplifying the structure of the transmission case 72.

In Figure 3, since the main body upper recess 134s and the main body lower recess 134t are formed in the main body upper peripheral wall 134p and the main body lower peripheral wall 134q, respectively, and the front-rear length of the main body lower recess 134t formed in the main body lower peripheral wall 134q is longer than that of the main body upper recess 134s formed in the main body upper peripheral wall 134p, the inventors show the experiment result that when the belt 174 vibrates, a contact area of the belt with the main body lower peripheral wall 134q exists over a wider area in the front-rear direction than that with the main body upper peripheral wall 134p. According to the above-described configuration, the belt 174 can be prevented from coming into direct contact with the joining portion 72a between the main body peripheral wall 134g and the cover peripheral wall 135g, and the main body upper recess 134s and the main body lower recess 134t are formed within the limitations, thereby capable of simplifying the structure of the transmission case 72.

In Figure 3, since the main body lower recess 134t is formed in the main body lower peripheral wall 134q, and the main body lower recess 134t of the main body lower peripheral wall 134q is formed at a position closer to the driven axis line L5 than the crank axis line L1, the belt 174 located below the straight line 205 connecting the crank axis line L1 and the driven axis line L5 is easily slackened particularly when the vehicle is accelerated, and the belt 174 is likely to come in contact with the main body lower peripheral wall 134q near the driven pulley 173 that becomes a winding side of the belt 174 located below the above-described straight line 205. According to the above-described configuration, the belt 174 can be prevented from coming into direct contact with the joining portion 72a between the main body peripheral wall 134g and the cover peripheral wall 135g, and the main body lower recess 134t is formed within the limitations, thereby capable of simplifying the structure of the transmission case.

In Figure 3, since the main body upper recess 134s is formed in the main body upper peripheral wall 134p, and the main body upper recess 134s of the main body upper peripheral wall 134p is formed at a position closer to the crank axis line L1 than the driven axis line L5, the belt 174 located above the straight line 205 connecting the crank axis line L1 and the driven axis line L5 is easily slackened particularly when the vehicle is decelerated, and the belt 174 is likely to come in contact with the main body upper peripheral wall 134p near the drive pulley 171 that becomes a winding side of the belt 174 located above the above-described straight line 205. According to the above-described configuration, the belt 174 can be prevented from coming into direct contact with the joining portion 72a between the main body peripheral wall 134g and the cover peripheral wall 135g, and the main body upper recess 134s is formed within the limitations, thereby capable of simplifying the structure of the transmission case 72.

For example, in the above-described embodiment, as illustrated in Figure 5 and Figure 6, the upper recess 72b and the lower recess 72c are formed in a trapezoidal sectional shape, but the shape is not limited thereto, and may be a rectangular sectional shape, a triangular sectional shape, a semicircular sectional shape, or a shape similar to these sectional shapes. In this case, each of the main body upper recess, the main body lower recess, the cover upper recess, and the cover lower recess has a rectangular sectional shape, a triangular sectional shape, a flabellate sectional shape, or a shape similar to these sectional shapes, each of which is divided into two in the vehicle width direction.

### [Reference Signs List]

- 10: Motorcycle (saddled vehicle)
- 12: Power unit
- 13: Rear wheel
- 31: Internal combustion engine
- 33: Crankshaft (drive shaft)
- 34D: Transmission case main body
- 35: Transmission case cover
- 72: Transmission case
- 86: Variable transmission chamber
- 134f: Main body bottom portion (bottom portion)
- 134g: Main body peripheral wall (first peripheral wall)
- 134m: Main body front peripheral wall (front peripheral wall)
- 134n: Main body rear peripheral wall (rear peripheral wall)
- 134p: Main body upper peripheral wall (upper peripheral wall)
- 134q: Main body lower peripheral wall (lower peripheral wall)
- 134r, 135r: Inner peripheral surface
- 134s: Main body upper recess (recess)
- 134t: Main body lower recess (recess)
- 134u, 134y, 135u, 135y: Curved surface
- 135g: Cover peripheral wall (second peripheral wall)
- 135s: Cover upper recess (recess)
- 135t: Cover lower recess (recess)
- 171: Drive pulley
- 172: Driven shaft (transmission shaft)
- 173: Driven pulley
- 174: Belt
- L1: Crank axis line (axis line)
- L5: Driven axis line (axis line)

## Claims

1. A transmission case structure for a saddled vehicle power unit in which a transmission case (72) that is integrally provided to an internal combustion engine (31) and is disposed lateral to a rear wheel (13) includes a transmission case main body (34D) that extends laterally of the rear wheel (13) from the internal combustion engine (31) and is open at an opposite side to the rear wheel (13), and a transmission case cover (35) that, together with the transmission case main body (34D), forms a variable transmission chamber (86) and is connected to the transmission case main body (34D) to close an open end of the transmission case main body (34D), the transmission case main body (34D) includes a bottom portion (134f) that is located lateral to the rear wheel (13), and a first peripheral wall (134g) that extends upwardly from the bottom portion (134f) and in which a distal end portion is open, the transmission case cover (35) includes a second peripheral wall (135g) that is to be connected to the distal end portion of the first peripheral wall (134g), the distal end portion of the first peripheral wall (134g) is connected to a distal end portion of the second peripheral wall (135g), so that the variable transmission chamber (86) is formed between the transmission case main body (34D) and the transmission case cover (35), and the variable transmission chamber (86) houses a drive pulley (171) that is attached to a drive shaft (33) rotated by a drive force generated from the internal combustion engine (31), a driven pulley (173) that is attached to a transmission shaft (172) provided on the rear wheel (13) side to transmit the drive force to the rear wheel (13), and an endless belt (174) that is wound around the drive pulley (171) and the driven pulley (173),
wherein the distal end portion of the first peripheral wall (134g) and the distal end portion of the second peripheral wall (135g) are provided in a range of motion of the belt (174) in an axial direction of the drive shaft (33), and recesses (134s, 134t, 135s, 135t) are formed in the distal end portion of the first peripheral wall (134g) and the distal end portion of the second peripheral wall (135g) along an extending direction of a straight line (205) connecting an axis line (L1) of the drive shaft (33) and an axis line (L5) of the transmission shaft (172), the recesses being recessed in a direction away from the belt (174);
**characterised in that**:
the recesses (134s, 134t) in the distal end portion of the first peripheral wall (134g) and the recesses (135s, 135t) in the distal end portion of the second peripheral wall (135g) are formed continuously with distal end portions of the first peripheral wall (134g) and distal end portions of the second peripheral wall (135g), respectively.

2. The transmission case structure for a saddled vehicle power unit according to claim 1, wherein
an inner peripheral surface (134r) of the first peripheral wall (134g) and an inner peripheral surface (135r) of the second peripheral wall (135g) are connected to the recesses (134s, 134t) in the distal end portion of the first peripheral wall (134g) and the recesses (135s, 135t) in the distal end portion of the second peripheral wall (135g) through curved surfaces (134y, 134u) and curved surfaces (135y, 135u), respectively.

3. The transmission case structure for a saddled vehicle power unit according to claim 1 or 2, wherein
in a side view of a vehicle, the recesses (134s, 134t, 135s, 135t) are formed at least within a range between the axis line (L1) of the drive shaft (33) and the axis line (L5) of the transmission shaft (172) in each distal end portion of the first peripheral wall (134g) and the second peripheral wall (135g).

4. The transmission case structure for a saddled vehicle power unit according to any one of claims 1 to 3, wherein
in a side view of a vehicle, the first peripheral wall (134g) includes a front peripheral wall (134m) that covers a front of the axis line (L1) of the drive shaft (33), a rear peripheral wall (134n) that covers a rear of the axis line (L5) of the transmission shaft (172), an upper peripheral wall (134p) that connects the front peripheral wall (134m) and the rear peripheral wall (134n), and a lower peripheral wall (134q) that connects the front peripheral wall (134m) and the rear peripheral wall (134n), so that the recesses (134s, 134t) are formed only in the upper peripheral wall (134p) and the lower peripheral wall (134q), respectively.

5. The transmission case structure for a saddled vehicle power unit according to any one of claims 1 to 4, wherein
in a side view of a vehicle, the first peripheral wall (134g) includes a front peripheral wall (134m) that covers the front of the axis line (L1) of the drive shaft (33), a rear peripheral wall (134n) that covers the rear of the axis line (L5) of the transmission shaft (172), an upper peripheral wall (134p) that connects upper portions of the front peripheral wall (134m) and the rear peripheral wall (134n), and a lower peripheral wall (134q) that connects lower portions of the front peripheral wall (134m) and the rear peripheral wall (134n), so that the recesses (134s, 134t) are formed in the upper peripheral wall (134p) and the lower peripheral wall (134q), respectively, and a front-rear length of the recess (134t) formed in the lower peripheral wall (134q) is longer than that of the recess (134s) formed in the upper peripheral wall (134p).

6. The transmission case structure for a saddled vehicle power unit according to any one of claims 1 to 5, wherein
in a side view of a vehicle, the first peripheral wall (134g) includes a front peripheral wall (134m) that covers the front of the axis line (L1) of the drive shaft (33), a rear peripheral wall (134n) that covers the rear of the axis line (L5) of the transmission shaft (172), an upper peripheral wall (134p) that connects upper portions of the front peripheral wall (134m) and the rear peripheral wall (134n), and a lower peripheral wall (134q) that connects lower portions of the front peripheral wall (134m) and the rear peripheral wall (134n), so that the recess (134t) is formed in the lower peripheral wall (134q), and the recess (134t) of the lower peripheral wall (134q) is formed at a position closer to the axis line (L5) of the transmission shaft (172) than the axis line (L1) of the drive shaft (33).

7. The transmission case structure for a saddled vehicle power unit according to any one of claims 1 to 6, wherein
in a side view of a vehicle, the first peripheral wall (134g) includes a front peripheral wall (134m) that covers the front of the axis line (L1) of the drive shaft (33), a rear peripheral wall (134n) that covers the rear of the axis line (L5) of the transmission shaft (172), an upper peripheral wall (134p) that connects upper portions of the front peripheral wall (134m) and the rear peripheral wall (134n), and a lower peripheral wall (134q) that connects lower portions of the front peripheral wall (134m) and the rear peripheral wall (134n), so that the recess (134s) is formed in the upper peripheral wall (134p), and the recess (134s) of the upper peripheral wall (134p) is formed at a position closer to the axis line (L1) of the drive shaft (33) than the axis line (L5) of the transmission shaft (172).

## Patentansprüche

1. Getriebegehäusekonstruktion für ein Antriebsaggregat eines Fahrzeugs vom Satteltyp, bei dem ein Getriebegehäuse (72), das integral mit einem Verbrennungsmotor (31) bereitgestellt und seitlich zu einem Hinterrad (13) angeordnet ist, einen Getriebegehäuse-Hauptkörper (34D), der sich seitlich des Hinterrads (13) vom Verbrennungsmotor (31) aus erstreckt und an einer dem Hinterrad (13) gegenüberliegenden Seite offen ist, und eine Getriebegehäuseabdeckung (35) aufweist, die, zusammen mit dem Getriebegehäuse-Hauptkörper (34D) eine stufenlose Getriebekammer (86) bildet und mit dem Getriebegehäuse-Hauptkörper (34D) verbunden ist, um ein offenes Ende des Getriebegehäuse-Hauptkörpers (34D) zu schließen, wobei der Getriebegehäuse-Hauptkörper (34D) einen Bodenabschnitt (134f), der seitlich zu dem Hinterrad (13) angeordnet ist, und eine erste Umfangswand (134g) aufweist, die sich von dem Bodenabschnitt (134f) nach oben erstreckt und in der ein distaler Endabschnitt offen ist, die Getriebegehäuseabdeckung (35) eine zweite Umfangswand (135g) aufweist, die mit dem distalen Endabschnitt der ersten Umfangswand (134g) zu verbinden ist, wobei der distale Endabschnitt der ersten Umfangswand (134g) mit einem distalen Endabschnitt der zweiten Umfangswand (135g) verbunden ist, so dass die stufenlose Getriebekammer (86) zwischen dem Getriebegehäuse-Hauptkörper (34D) und der Getriebegehäuseabdeckung (35) gebildet wird, und die stufenlose Getriebekammer (86) eine Antriebsriemenscheibe (171), die an einer Antriebswelle (33) befestigt ist, die durch eine von dem Verbrennungsmotor (31) erzeugte Antriebskraft gedreht wird, eine Abtriebsriemenscheibe (173), die an einer auf der Seite des Hinterrads (13) bereitgestellten Übertragungswelle (172) befestigt ist, um die Antriebskraft auf das Hinterrad (13) zu übertragen, und einen Endlosriemen (174), der um die Antriebsriemenscheibe (171) und die Abtriebsriemenscheibe (173) gewickelt ist, aufnimmt,
wobei der distale Endabschnitt der ersten Umfangswand (134g) und der distale Endabschnitt der zweiten Umfangswand (135g) in einem Bewegungsbereich des Riemens (174) in einer axialen Richtung der Antriebswelle (33) bereitgestellt sind und Aussparungen (134s, 134t, 135s, 135t) in dem distalen Endabschnitt der ersten Umfangswand (134g) und dem distalen Endabschnitt der zweiten Umfangswand (135g) entlang einer Erstreckungsrichtung einer geraden Linie (205), die eine Achslinie (L1) der Antriebswelle (33) und eine Achslinie (L5) der Übertragungswelle (172) verbindet, ausgebildet sind, wobei die Aussparungen in einer Richtung weg von dem Riemen (174) ausgespart sind;
**dadurch gekennzeichnet, dass**:
die Aussparungen (134s, 134t) in dem distalen Endabschnitt der ersten Umfangswand (134g) und die Aussparungen (135s, 135t) in dem distalen Endabschnitt der zweiten Umfangswand (135g) durchgehend mit distalen Endabschnitten der ersten Umfangswand (134g) bzw. distalen Endabschnitten der zweiten Umfangswand (135g) ausgebildet sind.

2. Getriebegehäusekonstruktion für ein Antriebsaggregat eines Fahrzeugs vom Satteltyp nach Anspruch 1, wobei
eine innere Umfangsfläche (134r) der ersten Umfangswand (134g) und eine innere Umfangsfläche (135r) der zweiten Umfangswand (135g) mit den Aussparungen (134s, 134t) im distalen Endabschnitt der ersten Umfangswand (134g) und den Aussparungen (135s, 135t) im distalen Endabschnitt der zweiten Umfangswand (135g) durch gekrümmte Flächen (134y, 134u) bzw. gekrümmte Flächen (135y, 135u) verbunden sind.

3. Getriebegehäusekonstruktion für ein Antriebsaggregat eines Fahrzeugs vom Satteltyp nach Anspruch 1 oder 2, wobei
in einer Seitenansicht eines Fahrzeugs die Aussparungen (134s, 134t, 135s, 135t) zumindest in einem Bereich zwischen der Achslinie (L1) der Antriebswelle (33) und der Achslinie (L5) der Übertragungswelle (172) in jedem distalen Endabschnitt der ersten Umfangswand (134g) und der zweiten Umfangswand (135g) ausgebildet sind.

4. Getriebegehäusekonstruktion für ein Antriebsaggregat eines Fahrzeugs vom Satteltyp nach einem der Ansprüche 1 bis 3, wobei
in einer Seitenansicht eines Fahrzeugs die erste Umfangswand (134g) eine vordere Umfangswand (134m), die eine Vorderseite der Achslinie (L1) der Antriebswelle (33) abdeckt, und eine hintere Umfangswand (134n), die eine Rückseite der Achslinie (L5) der Antriebswelle (172) abdeckt, eine obere Umfangswand (134p), die die vordere Umfangswand (134m) und die hintere Umfangswand (134n) verbindet, und eine untere Umfangswand (134q), die die vordere Umfangswand (134m) und die hintere Umfangswand (134n) verbindet, einschließt, so dass die Aussparungen (134s, 134t) nur in der oberen Umfangswand (134p) bzw. der unteren Umfangswand (134q) ausgebildet sind.

5. Getriebegehäusekonstruktion für ein Antriebsaggregat eines Fahrzeugs vom Satteltyp nach einem der Ansprüche 1 bis 4, wobei
in einer Seitenansicht eines Fahrzeugs die erste Umfangswand (134g) eine vordere Umfangswand (134m), die die Vorderseite der Achslinie (L1) der Antriebswelle (33) abdeckt, eine hintere Umfangswand (134n), die die Rückseite der Achslinie (L5) der Übertragungswelle (172) abdeckt, eine obere Umfangswand (134p), die obere Abschnitte der vorderen Umfangswand (134m) und der hinteren Umfangswand (134n) verbindet, und eine untere Umfangswand (134q), die untere Abschnitte der vorderen Umfangswand (134m) und der hinteren Umfangswand (134n) verbindet, einschließt, so dass die Aussparungen (134s, 134t) in der oberen Umfangswand (134p) bzw. der unteren Umfangswand (134q) ausgebildet sind und eine Länge von vorne nach hinten der in der unteren Umfangswand (134q) ausgebildeten Aussparung (134t) länger ist als jene der in der oberen Umfangswand (134p) ausgebildeten Aussparung (134s).

6. Getriebegehäusekonstruktion für ein Antriebsaggregat eines Fahrzeugs vom Satteltyp nach einem der Ansprüche 1 bis 5, wobei
in einer Seitenansicht eines Fahrzeugs die erste Umfangswand (134g) eine vordere Umfangswand (134m), die die Vorderseite der Achslinie (L1) der Antriebswelle (33) abdeckt, eine hintere Umfangswand (134n), die die Rückseite der Achslinie (L5) der Übertragungswelle (172) abdeckt, eine obere Umfangswand (134p), die obere Abschnitte der vorderen Umfangswand (134m) und der hinteren Umfangswand (134n) verbindet, und eine untere Umfangswand (134q), die untere Abschnitte der vorderen Umfangswand (134m) und der hinteren Umfangswand (134n) verbindet, einschließt, so dass die Aussparung (134t) in der unteren Umfangswand (134q) ausgebildet ist und die Aussparung (134t) der unteren Umfangswand (134q) an einer Position näher zu der Achslinie (L5) der Übertragungswelle (172) als zu der Achslinie (L1) der Antriebswelle (33) ausgebildet ist.

7. Getriebegehäusekonstruktion für ein Antriebsaggregat eines Fahrzeugs vom Satteltyp nach einem der Ansprüche 1 bis 6, wobei
in einer Seitenansicht eines Fahrzeugs die erste Umfangswand (134g) eine vordere Umfangswand (134m), die die Vorderseite der Achslinie (L1) der Antriebswelle (33) abdeckt, eine hintere Umfangswand (134n), die die Rückseite der Achslinie (L5) der Übertragungswelle (172) abdeckt, eine obere Umfangswand (134p), die obere Abschnitte der vorderen Umfangswand (134m) und der hinteren Umfangswand (134n) verbindet, und eine untere Umfangswand (134q), die untere Abschnitte der vorderen Umfangswand (134m) und der hinteren Umfangswand (134n) verbindet, einschließt, so dass die Aussparung (134s) in der oberen Umfangswand (134p) ausgebildet ist und die Aussparung (134s) der oberen Umfangswand (134p) an einer Position näher zu der Achslinie (L1) der Antriebswelle (33) als zu der Achslinie (L5) der Übertragungswelle (172) ausgebildet ist.

## Revendications

1. Structure de carter de boîte de vitesses pour une unité de puissance de véhicule de type à selle, dans laquelle un carter de boîte de vitesses (72) qui est relié d'un seul tenant à un moteur à combustion interne (31) et est disposé latéralement par rapport à une roue arrière (13), inclut un corps principal de carter de boîte de vitesses (34D) qui s'étend latéralement de la roue arrière (13) à partir du moteur à combustion interne (31) et est ouvert vers un côté opposé à la roue arrière (13), et un capot de carter de boîte de vitesses (35) qui, conjointement avec le corps principal de carter de boîte de vitesses (34D), forme une chambre de transmission variable (86) et est raccordé au corps principal de carter de boîte de vitesses (34D) pour fermer une extrémité ouverte du corps principal de carter de boîte de vitesses (34D), le corps principal de carter de boîte de vitesses (34D) comprend une partie inférieure (134f) qui est située latéralement par rapport à la roue arrière (13), et une première paroi périphérique (134g) qui s'étend vers le haut depuis la partie inférieure (134f) et dans laquelle une partie d'extrémité distale est ouverte, le capot de carter de boîte de vitesses (35) inclut une seconde paroi périphérique (135g) qui doit être raccordée à la partie d'extrémité distale de la première paroi périphérique (134g), la partie d'extrémité distale de la première paroi périphérique (134g) est raccordée à une extrémité distale de la seconde paroi périphérique (135g) de telle sorte que la chambre de transmission variable (86) soit formée entre le corps principal de carter de boîte de vitesses (34D) et le capot de carter de boîte de vitesses (35) et la chambre de transmission variable (86) loge une poulie d'entraînement (171) qui est fixée à un arbre d'entraînement (33) mis en rotation par une force d'entraînement générée depuis le moteur à combustion interne (31), une poulie menée (173) qui est fixée à un arbre de transmission (172) disposé du côté de la roue arrière (13) pour transmettre la force d'entraînement à la roue arrière (13) et une courroie sans fin (174) qui est enroulée autour de la poulie d'entraînement (171) et la poulie menée (173),
dans laquelle la partie d'extrémité distale de la première paroi périphérique (134g) et la partie d'extrémité distale de la seconde paroi périphérique (135g) sont disposées dans une plage de mouvement de la courroie (174) dans une direction axiale de l'arbre d'entraînement (33), et des évidements (134s, 134t, 135s, 135t) sont formés dans la partie d'extrémité distale de la première paroi périphérique (134g) et dans la partie d'extrémité distale de la seconde paroi périphérique (135g) le long d'une direction de prolongement d'une ligne droite (205) reliant une ligne d'axe (L1) de l'arbre d'entraînement (33) et une ligne d'axe (L5) de l'arbre de transmission (172), les évidements étant évidés dans une direction s'éloignant de la courroie (174) ;
**caractérisée en ce que** :
les évidements (134s, 134t) dans la partie d'extrémité distale de la première paroi périphérique (134g) et les évidements (135s, 135t) dans la partie d'extrémité distale de la seconde paroi périphérique (135g) sont formés de manière continue avec des parties d'extrémité distale de la première paroi périphérique (134g) et des parties d'extrémité distale de la seconde paroi périphérique (135g), respectivement.

2. Structure de carter de boîte de vitesses pour une unité de puissance de véhicule de type à selle selon la revendication 1, dans laquelle
une surface périphérique interne (134r) de la première paroi périphérique (134g) et une surface périphérique interne (135r) de la seconde paroi périphérique (135g) sont raccordées aux évidements (134s, 134t) dans la partie d'extrémité distale de la première paroi périphérique (134g) et aux évidements (135s, 135t) dans la partie d'extrémité distale de la seconde paroi périphérique (135g) par le biais de surfaces incurvées (134y, 134u) et de surfaces incurvées (135y, 135u), respectivement.

3. Structure de carter de boîte de vitesses pour une unité de puissance de véhicule de type à selle selon la revendication 1 ou 2, dans laquelle
dans une vue de côté d'un véhicule, les évidements (134s, 134t, 135s, 135t) sont formés au moins dans une plage entre la ligne d'axe (L1) de l'arbre d'entraînement (33) et la ligne d'axe (L5) de l'arbre de transmission (172) dans chaque partie d'extrémité distale de la première paroi périphérique (134g) et de la seconde paroi périphérique (135g).

4. Structure de carter de boîte de vitesses pour une unité de puissance de véhicule de type à selle selon l'une quelconque des revendications 1 à 3, dans laquelle
dans une vue de côté d'un véhicule, la première paroi périphérique (134g) inclut une paroi périphérique avant (134m) qui recouvre un avant de la ligne d'axe (L1) de l'arbre d'entraînement (33), une paroi périphérique arrière (134n) qui recouvre un arrière de la ligne d'axe (L5) de l'arbre de transmission (172), une paroi périphérique supérieure (134p) qui relie la paroi périphérique avant (134m) et la paroi périphérique arrière (134n), et une paroi périphérique inférieure (134q) qui relie la paroi périphérique avant (134m) et la paroi périphérique arrière (134n) de telle sorte que les évidements (134s, 134t) soient formés seulement dans la paroi périphérique supérieure (134p) et la paroi périphérique inférieure (134q), respectivement.

5. Structure de carter de boîte de vitesses pour une unité de puissance de véhicule de type à selle selon l'une quelconque des revendications 1 à 4, dans laquelle
dans une vue de côté d'un véhicule, la première paroi périphérique (134g) inclut une paroi périphérique avant (134m) qui recouvre l'avant de la ligne d'axe (L1) de l'arbre d'entraînement (33), une paroi périphérique arrière (134n) qui recouvre l'arrière de la ligne d'axe (L5) de l'arbre de transmission (172), une paroi périphérique supérieure (134p) qui relie des parties supérieures de la paroi périphérique avant (134m) et de la paroi périphérique arrière (134n), et une paroi périphérique inférieure (134q) qui relie des parties inférieures de la paroi périphérique avant (134m) et de la paroi périphérique arrière (134n) de telle sorte que les évidements (134s, 134t) soient formés dans la paroi périphérique supérieure (134p) et la paroi périphérique inférieure (134q), respectivement, et qu'une longueur avant-arrière de l'évidement (134t) formé dans la paroi périphérique inférieure (134q) soit plus longue que celle de l'évidement (134s) formé dans la paroi périphérique supérieure (134p).

6. Structure de carter de boîte de vitesses pour une unité de puissance de véhicule de type à selle selon l'une quelconque des revendications 1 à 5, dans laquelle
dans une vue de côté d'un véhicule, la première paroi périphérique (134g) inclut une paroi périphérique avant (134m) qui recouvre l'avant de la ligne d'axe (L1) de l'arbre d'entraînement (33), une paroi périphérique arrière (134n) qui recouvre l'arrière de la ligne d'axe (L5) de l'arbre de transmission (172), une paroi périphérique supérieure (134p) qui relie des parties supérieures de la paroi périphérique avant (134m) et de la paroi périphérique arrière (134n), et une paroi périphérique inférieure (134q) qui relie des parties inférieures de la paroi périphérique avant (134m) et de la paroi périphérique arrière (134n) de telle sorte que l'évidement (134t) soit formé dans la paroi périphérique inférieure (134q) et que l'évidement (134t) de la paroi périphérique inférieure (134q) soit formé à une position plus proche de la ligne d'axe (L5) de l'arbre de transmission (172) que de la ligne d'axe (L1) de l'arbre d'entraînement (33).

7. Structure de carter de boîte de vitesses pour une unité de puissance de véhicule de type à selle selon l'une quelconque des revendications 1 à 6, dans laquelle
dans une vue de côté d'un véhicule, la première paroi périphérique (134g) inclut une paroi périphérique avant (134m) qui recouvre l'avant de la ligne d'axe (L1) de l'arbre d'entraînement (33), une paroi périphérique arrière (134n) qui recouvre l'arrière de la ligne d'axe (L5) de l'arbre de transmission (172), une paroi périphérique supérieure (134p) qui relie des parties supérieures de la paroi périphérique avant (134m) et de la paroi périphérique arrière (134n), et une paroi périphérique inférieure (134q) qui relie des parties inférieures de la paroi périphérique avant (134m) et de la paroi périphérique arrière (134n) de telle sorte que l'évidement (134s) soit formé dans la paroi périphérique supérieure (134p) et que l'évidement (134s) de la paroi périphérique supérieure (134p) soit formé à une position plus proche de la ligne d'axe (L1) de l'arbre d'entraînement (33) que de la ligne d'axe (L5) de l'arbre de transmission (172).
